# EUROPEAN PATENT SPECIFICATION

(11) **EP 2 658 701 B1**
(45) Date of publication and mention of the grant of the patent: **25.03.2015**
(21) Application number: 11831774.2
(22) Date of filing: 30.12.2011
(51) Int. Cl.: B29C 53/78, F16L 9/16, F16L 9/18, B29L 23/00, B29C 53/28, B29C 53/82

(54) **METHOD OF MANUFACTURING A PIPE FROM THERMOPLASTIC MATERIAL**
VERFAHREN ZUR HERSTELLUNG EINES ROHRES AUS THERMOPLASTISCHEM KUNSTSTOFF
PROCÉDÉ PERMETTANT DE FABRIQUER UN TUYAU À PARTIR D'UNE MATIÈRE THERMOPLASTIQUE

(30) Priority: 31.12.2010 PL 39352510
(43) Date of publication of application: 06.11.2013
(73) Proprietor: Szagru Sp. z o.o., 43-215 Studzienice (PL)
(72) Inventor: TAKALA, Seppo, PL-97-400 Belchatów (PL)
(74) Representative: Malcherek, Piotr
(86) International application number: PCT/IB2011/056030
(87) International publication number: WO 2012/090185

(56) References cited:
- EP-A1- 0 816 050
- FR-A1- 2 911 381
- US-A- 3 938 929
- US-A- 5 637 168
- US-A- 5 848 223
- US-B1- 6 190 480
- US-B1- 6 390 141

## Description

The invention relates to a method of manufacturing a pipe from thermoplastic material, in particular a single or multi-wall pipe manufactured by helical winding of an element made from thermoplastic material, designed especially to be used in wastewater systems or transport of fluids, including water.

For example, the European patent description EP 0816050 discloses a method and a device for producing plastic pipes used in wastewater and stormwater pipeline systems. According to said method, a flat strip is extruded from thermoplastic material and directly after extruding, while being in a molten state, said strip is spirally wound on rotating rollers of the device until a base pipe is formed, and after that reinforcing ribs are put on and attached to the external surface of the pipe, wherein said ribs contain a layer made from the same material as the base pipe and the internal filling from recycled plastics.

Another example of a method of producing a spirally wound pipe from a hollow thermoplastic profile with a rectangular cross section is disclosed in the Polish patent description PL 194867 B1. According to said method, the thermoplastic profile is wound onto a drum, the adjacent coils are extrusion welded together, the outside seam is then smoothed by means of special heating and a smoothing unit leaning against the seam, after that the pipe is fed axially towards freely rotating elements, radial pressing rollers working on the thermoplastic profile during the first winding onto the drum. While the thermoplastic profile is being led onto the drum, it passes through a first stationary section comprising spaced sliding elements located along the circumference thereof, where extrusion welding takes place and after which the shaped internal seam is positioned in such a way that it runs along the spiral furrow along the first stationary section, where the internal seam and the external seam are machined with the use of special heating and a stationary smoothing unit leaning against said seams, and that said pipe with simultaneously smoothened surfaces is led to the section of a rotary drive drum which turns the pipe and induces the winding movement of the thermoplastic profile.

Furthermore, a method of manufacturing spirally wound plastic pipes is known from the Polish application description of invention PL377750A. Said method consists in forming a strip-shaped profile with a rectangular cross section which has a recess on one side in the shape of a semi-circle and/or an open polygon along the horizontal edges, and on the other side said profile has a spline in the shape corresponding with the formed recess. Moreover, inside the profile there are formed parallel channels of arbitrary shape, thus leading to the hollowing thereof. The hollowed profile is wound upon a rotary sleeve, thus a spiral tube is shaped, the adjacent horizontal spirally wound edges are connected by means of a catch fastener formed on the borders of the profile. The manufactured plastic pipe is continuously axially shifted by the wound profile. Additionally, the catch fastener, in the place of the recess is preferably filled with the molten material of the profile. The manufactured pipes are used in the construction of water and wastewater pipelines.

In the above descriptions of methods a term 'spiral winding' was used, which can be understood as winding along a helical path as shown in the presented embodiments and attached drawings. For the needs of the present invention the term helical winding shall be used, which should be understood according to the common meaning of the term, which means winding along a helical path, along the formed cylinder or conic line. It also encompasses the meaning used in the state of the art described above.

The closest prior art is US 6 190 480. This document discloses a method of manufacturing a pipe from thermoplastic material consisting in helical winding of an element from thermoplastic material onto a drum with the use of rotary rollers and bonding together the adjacent coils. A helical rib in the form of another strip is attached to the external surface of the pipe.

The invention relates to a method of manufacturing a pipe from thermoplastic material according to claim 1. The essence of the invention is that a pipe is manufactured from a pre-manufactured strip made from thermoplastic material by helical winding of said strip onto a drum and bonding together the adjacent coils, wherein a helically formed rib in the form of an additional pre-manufactured strip made from thermoplastic material is attached to the external surface of the manufactured pipe. The rib is attached to the external surface of the pipe with one of the side edges in such a way that the side surfaces of the rib are perpendicular to the external surface of the pipe and the rib is helically shaped. The strip for manufacturing the rib is corrugated or formed to a wave-like or concertina-like shape prior to attaching the so formed rib.

The pre-manufactured strip made from thermoplastic material means a strip manufactured from known material by known methods, for example by extrusion, fully formed. Said strip may also comprise a reinforcing element or elements from another material. Said reinforcing element or elements may be inside the strip or attached to the surface thereof. Furthermore, said reinforcing element or elements may be located in the whole width of the strip or, alternatively, only in a part of the width thereof. It is also possible to add known additives to the thermoplastic materials.

Preferably a pre-manufactured additional strip made from thermoplastic material is wound onto the so manufactured pipe and fastened to the upper edges of the adjacent coils of the rib in such a way that said strip covers the space between the adjacent coils of the rib of the pipe.

It is also advisable that more than one helical rib is attached to the external surface of the pipe.

It is also intended that the manufacturing of the pipe beginning with the winding of the strip onto the drum is carried out as a continuous process.

Another benefit is achieved when the strip is created by means of cutting a prefabricated sheet of thermoplastic material. It refers to the strip wound onto the drum and the strip creating the rib and the external strip fastened to the upper edges of the rib.

It is also an option that the pipe is manufactured with the use of a mobile device, preferably in the area of construction of wastewater or water pipeline systems.

The method according to the invention allows for manufacturing light weight large diameter pipes with the use of a mobile device, which makes it possible to manufacture said pipes in the area of construction of a pipeline. The presented method is uncomplicated and highly effective, consuming low amounts of energy and the application thereof requires no sophisticated devices. Large diameter pipes are difficult to transport and store mainly due to their volume, thus it is important that the pipes can be manufactured from pre-manufactured strips at any location with the use of a mobile device. Such strips occupy little space and the transport thereof is uncomplicated. The method of manufacturing requires low amounts of energy thus the process may be run from a local electrical network or even a mobile generator. Furthermore, said method allows for manufacturing pipes of many different types made to customer's requirements, for short series and special applications, such as silos or tanks. The stresses created during manufacturing of the pipe are virtually limited to the seams area, owing to which the shape of the pipe remains stable after cutting and further joining is uncomplicated. The consumption of materials has also been reduced due to the optimized structure, material waste from starting and stopping the production has also been considerably reduced. While selecting material for strips it is possible to easily change the strength parameters by means of composite materials. Creating a corrugated or a wave-like rib, the possibility to attach more than one helically formed rib on the external surface of the pipe and the possibility to cover from the top the spaces between the coils of the rib allows for optimal reinforcement for the stiffness of the pipe according to the requirements.

The invention is presented in more detail in the following embodiments and in the attached drawing, where fig. 1 shows a schematic perspective view of the device realizing the method of manufacturing a pipe with highlighted working elements of the device, fig. 2 - a schematic cross section of the pre-manufactured flat strip for manufacturing the pipe, fig. 3 - a schematic longitudinal section of a fragment of the pipe manufactured according to the claimed method, fig. 4 - a schematic longitudinal section of a fragment of the pipe with an additional external strip attached to the upper edges of the rib, whereas fig. 5 is a schematic longitudinal section of a fragment of the pipe with two ribs and an additional external strip attached to the upper edges of the rib.

The method of manufacturing a pipe from thermoplastic material consists in manufacturing a pipe from a pre-manufactured strip made from thermoplastic material. The concept of a pre-manufactured strip was explained in the above description of the essence of the invention, wherein it is possible to pre-manufacture a strip as such or, optionally, cut a pre-manufactured sheet from thermoplastic material into strips of required width. As was mentioned above, the strips may comprise reinforcement and be manufactured from various thermoplastic materials, depending on the requirements, with possible additives. A helically wound light weight pipe is manufactured with the use of rotary rollers making up a drum, onto which a pre-manufactured strip is helically wound and the coils are bonded together by known methods, for example by extrusion welding by forcing in material from an extruder or other known methods of welding thermoplastic materials. It is also possible to use glue for bonding. Moreover, it is also possible to wind the adjacent coils of a pipe in such a way that one coil overlaps with the adjacent one. In case of such structure it is possible to bond the adjacent coils by laminating the surface. Various resins or hot bonding may be used for bonding. The drum, onto which the element in the form of a strip is wound, is made up of rotating rollers which are located in such a way that the rotation axes thereof are mutually parallel spaced around the circumference of a cylinder thus making up the drum. The strip for manufacturing the pipe has two essentially flat surfaces, the upper and lower surface and two side edges. Subsequently, an additional helically shaped rib made from a pre-manufactured thermoplastic strip is attached to the external surface of the manufactured pipe. The rib is attached to the external surface of the pipe with one of the side edges of the strip in such a way that the side surface of the rib is perpendicular to the external surface of the previously formed pipe, and the rib is helically shaped. The external helical rib ensures the circumferential stiffness of the pipe. Furthermore, a dual closed structure of a pipe wall may be obtained by attaching an additional thermoplastic strip to the external edges of the rib in such a way that said strip covers the space between the adjacent coils of the pipe rib. Prior to attaching the rib, the strip be corrugated or formed into a wave-like shape in such a way that after attaching said rib to the external surface of the pipe in view of the pipe, the coils of the rib may have corrugated or wave-like shape. More than one helical rib, for example two or three, may be attached to the external surface of the pipe. Manufacturing a pipe beginning with winding a flat strip onto a drum is carried out as a continuous process with the use of a mobile device, preferably in the area of construction site, for example a wastewater or water pipeline.

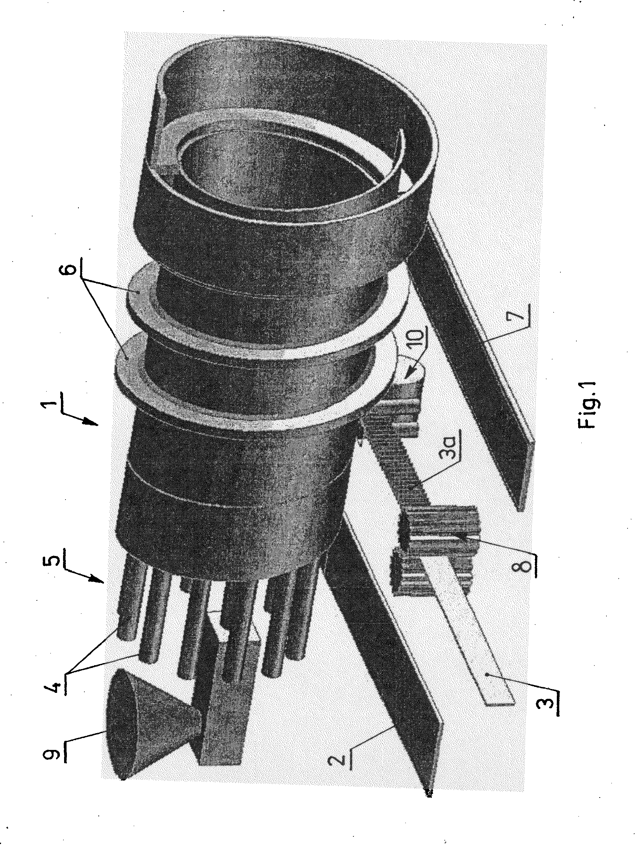

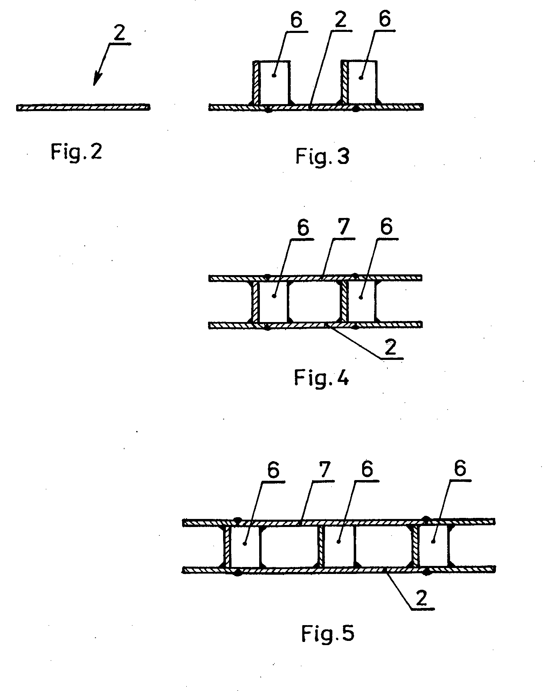

Referring in detail to the attached drawing, the pipe 1 is manufactured from a pre-manufactured flat strip 2 ( fig. 2 ) which strip 2 is helically wound with the base thereof on rollers 4 making up a drum 5 ( fig. 1 ). After winding, the adjacent coils of the strip 2 are bonded together by the methods described above ( fig. 3 ), for example by extrusion welding. Subsequently, a helically shaped rib 6 in the form of a pre-manufactured flat strip 3 made from thermoplastic material is attached to the external surface of the manufactured pipe. The rib 6 is attached to the external surface of the pipe 1 with one of the side edges of the strip 3 in such a way that the side surface of the strip 3 is perpendicular to the external surface of the pipe 1, whereas the rib 6 is helically shaped. The rib 6 is made from a flat strip which is corrugated or formed into a wave-like shape in a corrugating device 8 in such a way that after attaching said rib to the external surface of the pipe 1 in the view of the pipe 1 the coils of the rib have a corrugated or wave-like shape. More than one helical rib 6 may be attached to the external surface of the pipe 1 ( fig. 5 ).

In a preferred embodiment a pre-manufactured additional strip 7 from thermoplastic material may be attached to the above described pipe 1( fig. 1, fig. 4, fig. 5 ). The strip 7 constituting the external layer of the pipe 1 is attached by methods described above to the upper edges of the rib 6.

Fig. 1 shows in detail the method of winding the strip 2 onto a winder, which is a drum 5 comprising rotating rollers 4. The pre-manufactured strip 2 is led from a reel not shown in the drawing and via a feeder it is led onto the drum 5. The helical shaping of the pipe 1 is carried out by rotating rollers 4 and the adjacent coils are extrusion welded at the edges. Welding is performed by means of an extruder 9 between the rollers 4. Extrusion welding may also be done from the outside provided that the internal surface is smooth, according to the method disclosed in the patent description EP 1237708. The ribs 6 are formed from the strip 3 which goes through the corrugating device 8 and is bent along the helical line of the surface and is welded to the external surface of the pipe 1 by means of guides 10. More than one spiral rib 6 may be attached to the external surface of the pipe 1, which is justified if it is necessary to reinforce the structure of the pipe 1. In certain cases extrusion welding of the external strip 7 to the additional ribs 6 may be omitted.

In particular, the corrugated or wave-like strip 3a is tangentially fed onto the pipe 1 manufactured by helical winding of the strip 2 and welded to the external surface thereof, thus creating the structure of the spiral wave-like rib 6. Welding is preferably done with the use of an extruder. The extruded material is on the helical preheated surface of the pipe 1, and the strip 3a is pressed to the molten material and smoothed by means of pressing rollers and pressing units 10.

The strips 2, 3, 7 may be of uniform or composite structure. The strip 2 may be helically wound as in the known process "Drostholm" of a system for manufacturing fibreglass pipes in a continuous process. The difference is that there is a gap between the coils of the strip 2 which allows to weld together the adjacent coils of the strip.

The so manufactured pipe 1 with an open profile, the so called base pipe may be used for building pipelines where lower circumferential stiffness is allowed or it is required by another aspect of the design. In order to increase the circumferential stiffness and/or ensure higher strength and safety of the base pipe an additional external layer may be attached in the same continuous process. To do that, an additional strip 7 with a suitable width is fed from a reel not shown in the drawing. The speed of the feeder is regulated in order to adjust it to the rotational speed of the external surface of the rib 6 of the base pipe. Along at least one of the edges or along two edges the additional strip 7 is bonded with the helical surface of the rib 6. It is possible to further tighten and reinforce the pipe by additional extrusion welds. The external seams may also be made together with the internal seams with the use of special welding heads or a number of welding heads fed from the same extruder. The so manufactured helically wound pipe 1 is subsequently cut while going through a cutting unit not shown in the drawing. The ready pipe is cut in radial direction through the centre of the axis to required length. The cut lengths may be joined into a pipeline or transported to the storage place or loaded on wagons and delivered to clients.

Smoothing the internal and/or external surface of the pipe 1 in the area of the seams may be carried out by methods known from the state of the art.

## Claims

1. A method of manufacturing a pipe ( 1 ) from thermoplastic material in which the pipe ( 1) is manufactured from a pre-manufactured strip ( 2 ) previously made from thermoplastic material by helical winding of the strip ( 2 ) onto a drum ( 5) with the use of rotary rollers and the adjacent coils of the strip ( 2 ) are bonded together, wherein a helical rib ( 6 ) in the form of another strip ( 3 ) previously made from thermoplastic material is attached to the external surface of the manufactured pipe ( 1 ), wherein the rib ( 6 ) is attached to the pipe ( 1 ) by one of the side edges of the strip ( 3 ) in such a way that the side surfaces of the rib ( 6 ) are perpendicular to the external surface of the pipe ( 1 ), **characterised in that** prior to attachment of the rib ( 6 ), the strip ( 3) is corrugated or formed to a wave-like shape.

2. The method according to claim 1 **characterised in that** an additional strip ( 7) previously made from thermoplastic material, covering the space between the coils of the rib ( 6 ) is attached to the upper edges of the adjacent coils of the rib ( 6 ).

3. The method according to one of the claims 1 - 2, **characterised in that** more than one helical rib ( 6 ) is attached to the external surface of the pipe ( 1 ).

4. The method according to one of the claims 1 - 3, **characterised in that** manufacturing of the pipe ( 1 ) beginning with winding the strip ( 2 ) onto the drum ( 5 ) is carried out as a continuous process.

5. The method according to one of the claims 1 - 4, **characterised in that** the strips ( 2, 3, 7) are created by cutting a pre-manufactured sheet from thermoplastic material.

6. The method according to one of the claims 1 - 5, **characterised in that** the pipe ( 1 ) is manufactured with the use of a mobile device, preferably in the area of construction site of wastewater or water pipeline systems.

## Patentansprüche

1. Verfahren zur Herstellung eines Rohrs ( 1 ) aus thermoplastischem Kunststoff, gemäß deren das Rohr ( 1 ) aus fertigem Streifen ( 2 ) hergestellt wird, der früher aus thermoplastischem Kunststoff durch schraubenartige Aufwicklung des Streifens ( 2 ) auf die Trommel ( 5 ) unter Anwendung drehbarer Rollen gemacht wird, wobei die benachbarten Wicklungen des Streifens ( 2 ) miteinander verbunden werden, wobei an die äußere Oberfläche des hergestellten Rohrs ( 1 ) eine schraubenförmige Rippe ( 6 ) in der Gestalt eines weiteren Streifens ( 3 ), der früher aus thermoplastischem Kunststoff erzeugt wurde, befestigt wird, die Rippe ( 6 ) wird dabei an das Rohr ( 1 ) mittels einem Seitenrand des Streifens ( 3 ) auf solche Weise angebracht, dass die Seitenflächen des Streifens ( 3 ) quer zur äußeren Fläche des Rohrs ( 1 ) platziert sind, **gekennzeichnet dadurch**, dass der Streifen ( 3 ) vor Montage der Rippe (6) der Faltung bzw. der Wellenformgebung ausgesetzt wird.

2. Verfahren nach Anspruch 1, **gekennzeichnet dadurch**, dass an die oberen Ränder der benachbarten Wicklungen der Rippe (6) ein zusätzlicher Streifen ( 7 ) angebracht wird, der früher aus thermoplastischem Kunststoff erzeugt wurde, der den Raum zwischen den Wicklungen der Rippe ( 6 ) verdeckt.

3. Verfahren nach einem der Ansprüche 1 - 2, **gekennzeichnet dadurch**, dass an die äußere Fläche des Rohrs ( 1 ) mehr als eine schraubenartige Rippe ( 6 ) angebracht wird.

4. Verfahren nach einem der Ansprüche 1 - 3, **gekennzeichnet dadurch**, dass die Herstellung des Rohrs ( 1 ), von Aufwicklung des Streifens ( 2 ) auf die Trommel ( 5 ) angefangen, den ununterbrochenen Vorgang darstellt.

5. Verfahren nach einem der Ansprüche 1 - 4, **gekennzeichnet dadurch**, dass die Streifen ( 2, 3, 7 ) durch Schneiden eines früher ausgeführten Blatts aus thermoplastischen Kunststoff hergestellt werden.

6. Verfahren nach einem der Ansprüche 1 - 5, **gekennzeichnet dadurch**, dass die Herstellung des Rohrs ( 1 ) mittels einer mobilen Vorrichtung erfolgt, vorteilhaft an den Stellen, wo die Montage der Kanalisations- bzw. Wasserleitungen ausgeführt wird.

## Revendications

1. Procédé de fabrication d'un tube ( 1 ) en matériau thermoplastique, dans lequel le tube ( 1 ) est produit à partir de la bande finie ( 2 ) réalisé précédemment en matériau thermoplastique par enroulement hélicoïdal de la bande ( 2 ) sur le tambour (5) au moyen de rouleaux rotatifs et les bobines adjacentes de bande sont reliés (2), et la nervure hélicoïdale est fixée ( 6 ) sous la forme d'une autre bande ( 3 ) réalisé précédemment en matériau thermoplastique à la surface extérieure du tuyau produit ( 1 ); la nervure ( 6 ) est fixée au tuyau ( 1 ) à l'aide d'un des bords latéraux de la bande ( 3 ) de sorte que les surfaces latérales de la bande ( 3 ) sont disposés transversalement par rapport à la surface extérieure du tuyau ( 1 ), **caractérisé en ce que** la bande ( 3 ), avant la fixation des nervures ( 6 ), soit soumise à un pliage ou moulage pour obtenir une forme ondulée.

2. La méthode selon la rés. 1, **caractérisé en ce que** la bande supplémentaire ( 7) réalisé précédemment en matériau thermoplastique, recouvrant l'espace entre les spires de la nervure ( 6 ) soit fixée sur les bords supérieurs des spires adjacentes de la nervure ( 6 ).

3. La méthode selon l'une des rés. 1 - 2, **caractérisé en ce que** plus d'une nervure hélicoïdale ( 6 ) soit fixée à la surface extérieure du tube ( 1 ).

4. La méthode selon l'une des rés. 1 - 3, **caractérisé en ce que** le tube ( 1 ) à partir de l'enroulement de la bande ( 2 ) sur le tambour ( 5 ) est produit dans un procédé continu.

5. La méthode selon l'une des rés. 1 - 4, **caractérisé en ce que** les bandes ( 2, 3, 7 ) soient effectuées par découpe de la feuille préformée de matériau thermoplastique.

6. La méthode selon l'une des rés. 1 - 5, **caractérisé en ce que** le tube (1) soit effectué en utilisant un dispositif mobile, de préférence dans la zone de l'installation de réseau d'assainissement ou d'approvisionnement en eau.
